# EUROPÄISCHE PATENTSCHRIFT

(11) **EP 1 233 900 B1**
(45) Veröffentlichungstag und Bekanntmachung des Hinweises auf die Patenterteilung: **21.07.2004**
(21) Anmeldenummer: 01978326.5
(22) Anmeldetag: 30.08.2001
(51) Int. Cl.: B62D 29/00, B62D 25/14, B60H 1/00

(54) **BAUTEIL FÜR EIN KRAFTFAHRZEUG**
STRUCTURAL PART FOR A MOTOR VEHICLE
ELEMENT CONSTITUTIF POUR AUTOMOBILE

(30) Priorität: 07.09.2000 DE 10044292; 22.12.2000 DE 10064522
(43) Veröffentlichungstag der Anmeldung: 28.08.2002
(73) Patentinhaber: Behr GmbH & Co., 70469 Stuttgart (DE)
(72) Erfinder: FEITH, Thomas, 70825 Korntal-Münchingen (DE); NEUSS, Sabine, 85088 Vohburg (DE); REDDIG, Thomas, 74321 Bietigheim-Bissingen (DE); WOLF, Walter, 71570 Oppenweiler-Zell (DE)
(74) Vertreter: Grauel, Andreas, Dr.
(86) Internationale Anmeldenummer: PCT/EP2001/010024
(87) Internationale Veröffentlichungsnummer: WO 2002/020334

(56) Entgegenhaltungen:
- EP-A- 1 075 972
- DE-A- 10 005 718
- DE-C- 19 812 288
- DE-U- 29 916 470
- FR-A- 2 789 043

## Beschreibung

Die Erfindung betrifft ein Bauteil für ein Kraftfahrzeug, insbesondere einen Querträger für den Cockpitbereich, gemäß dem Oberbegriff des Anspruchs 1 sowie ein Herstellverfahren und Verwendungen dieses Bauteils.

Aus dem Kraftfahrzeugbau sind aus Rohren bestehende Querträger bekannt, die aus Metall bestehen und entsprechend große Wandstärken aufweisen, damit eine ausreichende Biege-, Knick- und Torisionssteifigkeit und damit eine ausreichende Druckbelastbarkeit gegeben ist. Daraus resultieren ein hohes Gewicht und Kostennachteile. Die Rohre lassen sich prinzipiell zur Luftführung, beispielsweise von einer mittig im Fahrzeug angeordneten Klimaanlage zu seitlichen Ausströmern, nutzen (siehe z.B. DE 197 53 877), wobei dies bis heute nicht genutzt wird, da sich an den Metallrohren leicht unerwünschtes Kondenswasser abscheiden kann.

Weiter sind Querträger bekannt, die eine zweischalige Konstruktion mit eingeschweißten Stegen zur Stabilisierung aufweisen. Ein derartiger Querträger ist beispielsweise aus der DE 197 20 902 bekannt. Derartige Querträger sind in der Herstellung sehr aufwendig und haben ein hohes Gewicht. Eine Luftführung ist nicht möglich.

Aus der EP 0 370 342 ist ein als Träger im Kraftfahrzeug einsetzbares Leichtbauteil in Hybridbauweise bekannt, das einen bevorzugt aus Metall bestehenden, schalenförmigen Grundkörper aufweist, in dessen Innenraum Verstärkungsrippen angeordnet sind. Die Verstärkungsrippen bestehen aus eingespritztem Kunststoff und sind mit dem Metallgrundkörper an diskreten Verbindungsstellen verbunden, indem der Kunststoff im Metallteil angeordnete Durchbrüche durchsetzt und über die Flächen der Durchbrüche hinausreicht. Der Metallgrundkörper ist U-förmig ausgebildet und die Verstärkungsrippen durchsetzen zur Erzielung einer hohen Steifigkeit und Festigkeit den Innenraum des Grundkörpers. Dieses bekannte Hybridbauteil hat ein vorteilhaft geringes Gewicht bei gleichzeitig ausreichender Festigkeit, Steifigkeit und Belastbarkeit. Eine Luftführung ist mit diesem als Träger einsetzbaren Leichtbauteil nicht möglich.

Aus der DE-U 200 08 201 ist ein Querträger in Hybridbauweise mit einem schalenartigen Grundkörper der durch eine eingespritzte Kunststoffverrippung ausgesteift ist, bekannt. Die Kunststoffrippen sind derart ausgeformt, dass ein als Luftkanal dienendes Kunststoffrohr formschlüssig eingelegt werden kann. Ein solches Einbringen eines Kanals ist aufwendig, da der Kanal separat hergestellt und in einem Arbeitsschritt eingelegt werden muß. Die derart in ihrer Form angepassten Rippen verlieren an Stabilität.

Aus der DE-U 299 16 470 ist ein weiterer Querträger bekannt, bei dem ein Kunststoffluftkanal von zwei den Querträger bildenden Metallschalen umhüllt ist. Einer solchen Konstruktion liegt das Problem der festen Verbindung der beiden Metallschalen zugrunde, denn der umhüllte Kunststoff verbietet beispielsweise aufgrund seiner schwachen Temperaturbeständigkeit ein Verschweißen der Metallschalen. Desweiteren ist nachteilig, daß das Kunststoffrohr und die Metallschalen in einzelnen Arbeitsschritten gefertigt und dann in einem weiteren Arbeitsschritt zusammengefügt werden müssen.

Die ältere nicht vorveröffentlichte EP-A-1 075 972 beschreibt ein Bauteil, insbesondere einen Querträger zum Anordnen zwischen A-Säulen eines Kraftfahrzeugs, mit einem im wesentlichen rohrartigen Grundkörper, in dem wenigstens ein Kanal vorgesehen ist, wobei der Grundkörper innen mit Kunststoff ausgekleidet ist zur Bildung von aus Kunststoff bestehenden Kanalwänden.

Ausgehend von diesem Stand der Technik ist es Aufgabe der Erfindung ein verbessertes Leichtbauteil bereitzustellen, das einfacher, mit weniger Arbeitsschritten und daher kostengünstiger herstellbar ist und in das in vorteilhafter Weise ein Kanal integrierbar ist, sowie ein Herstellverfahren und Verwendungen des Bauteils anzugeben.

Diese Aufgabe wird gelöst durch einen Gegenstand mit den Merkmalen des Anspruchs 1 und Verwendungen mit den Merkmalen der Ansprüche 15 und 16 sowie ein Herstellverfahren mit den Merkmalen des Anspruchs 17.

Erfindungsgemäß ist der Grundkörper innen mit angeformtem Kunststoff ausgekleidet, so daß die Kanalwände aus Kunststoff gebildet sind. Zusätzliche Luftführungskomponenten, wie Blasteile, Luftschläuche o. dgl. sind nicht mehr notwendig. Die Wandstärke des in der Regel aus Metall bestehenden Grundkörpers kann reduziert werden, wodurch Gewicht eingespart werden kann. An den Kanalwänden, die innenseitig aus Kunststoff bestehen, kann keine oder zumindest weniger Kondensation von in der klimatisierten Luft enthaltenen Feuchtigkeit auftreten. Dasselbe gilt für die Kondensation auf der Außenseite der Kanäle. In dem Kanal könnten auch andere Medien, wie Wischwasser für die Scheinwerfer oder die Windschutzscheibe, Kühlwasser, Öl, Druckluft oder dergleichen geführt oder gelagert werden. Ebenso kann der Kanal für die geschützte Verlegung von Kabeln, Benzinleitung, Ölleitung, Druckluftleitungen oder dergleichen oder zur Aufbewahrung von Gegenständen dienen.

Bei der Herstellung des erfindungsgemäßen Bauteils wird in kostengünstiger und einfacher Weise im wesentlichen lediglich der Grundkörper in ein Werkzeug eingelegt und durch Anformen des Kunststoffs der Grundkörper ausgekleidet, so daß ein geeigneter Kanal, beispielsweise Luftkanal gebildet ist.

Das erfindungsgemäße Bauteil hat den weiteren Vorteil, daß gegenüber den bekannten Bauteilen, bei denen auch eine Kombination von Metall und Kunststoff eingesetzt wird, jetzt nach der Erfindung ein preiswerterer Kunststoff eingesetzt werden kann, denn in dem erfindungsgemäßen Bauteil braucht der Kunststoff keine wesentliche Festigkeitsfunktion ausüben. Der Kunststoff dient größtenteils zur Isolierung, z.B. thermischer oder Schallisolierung. Die Festigkeit ergibt sich aus dem Verbund von Grundkörper und Kunststoff, wobei somit ein synegistischer Effekt erreicht wird. So kann beispielsweise gegenüber bisher bekannten Bauteilen ein dünneres Blech und kostengünstigerer Kunststoff eingesetzt werden.

Vorteilhafterweise weist der Grundkörper Durchbrechungen auf, die mit dem Kunststoff durchsetzt sind und wobei an den Grundkörper Halterungen, Anbindungspunkte oder Gehäuseteile einer Heizungs- oder Klimaanlage o. dgl. Elemente aus dem Kunststoff einstückig angeformt sind. Aufgrund der Durchbrechungen ist der Grundkörper mit dem Kunststoff fest verbunden, ähnlich wie bei einem Bauteil in Hybridbauweise, so daß das erfindungsgemäße Bauteil ebenfalls ein vorteilhaft geringeres Gewicht aufweist. Damit Kanalwandungen des durch den Grundkörper gebildeten Kanals aber geschlossen bleiben, werden diese Durchbrechungen durch den Kunststoff verschlossen. Gleichzeitig können beim Einbringen des Kunststoffs Halterungen, Anbindungspunkte oder beispielsweise auch Gehäuseteile einer Klimaanlage mit angeformt werden, so daß in einem einzigen Verfahrensschritt ein Instrumententafelträger mit Querträger erhalten werden kann, der leicht ist, eine Vielzahl von Anbindungspunkten und Halterungen und gegebenenfalls auch bereits Gehäuseteile aufweist und in den ein Luftkanal, beispielsweise zur Führung von klimatisierter Luft, enthalten ist.

In einem Ausführungsbeispiel ist der Kunststoff in einem Spritzgußverfahren einbringbar. Ein derart eingebrachter Kunststoff kann relativ fest ausgebildet sein und auch Haltefunktionen ausüben.

Wenn der Kunststoff eine geringere Festigkeit aufweisen darf, kann er aus einem Schaummaterial, beispielsweise einem Polyurethanschaum oder einem Partikelschaum, bestehen.

Ein Kunststoff, der sehr leicht ist und dennoch eine hohe Festigkeit besitzt, besteht aus über ein Bindemittel miteinander verbundenen Schaumpartikeln. Ein derartiger Verbund-Kunststoff ist beispielsweise im Handel unter der Markenbezeichnung "Xeratec" erhältlich.

Das Bauteil bildet vorzugsweise einen zwischen den A-Säulen des Fahrzeugs anzuordnenden Querträger, an den die Instrumententafel und weitere Komponenten, wie Lenksäule, Airbag o.dgl. angebunden werden können.

Insgesamt ist bei der Fertigung des Kraftfahrzeuges die Teilevielfalt reduziert, da das erfindungsgemäße Bauteil, beispielsweise als Instrumententafelträger sämtliche Halterungen und Luftkanäle sowie einen Teil des Klimaanlagengehäuses enthalten kann. Dadurch kann Montagezeit und Arbeitsaufwand eingespart werden kann und eine vorteilhafte Vorprüfbarkeit des Bauteils wird ermöglicht.

Um die Steifigkeit des Bauteils zu erhöhen, können einstückig angeformte Kunststoffrippen vorgesehen sein.

Anbindungspunkte wie beispielsweise die Anbindungen an A-Säulen eines Fahrzeugs müssen sehr stabil sein und sollten daher aus Metall bestehen. Derartige Anbindungselemente sind in einer Ausgestaltung der Erfindung daher an den Grundkörper vor dem Einbringen des Kunststoffs durch Schweißen, Clinchen oder andere Fügeverfahren anbindbar. Sie könnten beispielsweise über Kunststoffrippen weiter stabilisiert werden.

In einer Ausführungsform der Erfindung ist der rohrartige Grundkörper aus zwei Halbschalen gebildet, die über den eingebrachten Kunststoff miteinander verbunden sind. Rohrartige Querträger mit ihren vielen Anbindungspunkten für Lenksäule, Airbag, etc., sind kostengünstiger aus zwei Halbschalen herstellbar. Gemäß der Erfindung müssen die Halbschalen aber nicht miteinander vorverbunden sein, sondern können als Halbschalen in das Werkzeug eingelegt werden. In dem Werkzeug können sie dann optional zunächst mechanisch miteinander verbunden werden, beispielsweise durch Verstemmen. Vorteilhafterweise werden die Halbschalen zusätzlich oder sogar ausschließlich über den eingebrachten Kunststoff miteinander verbunden werden, beispielsweise nach Art von Nieten, so daß der Kunststoff unter anderem Nieten bildet. Dazu müssen selbstverständlich entsprechende Öffnungen in den Halbschalen vorgesehen sein, die mit dem Kunststoff ausgefüllt werden.

Um im Herstellprozeß ein vorteilhaftes Fließen des Kunststoffs zu ermöglichen sind in Weiterbildung der Erfindung zwischen den aneinanderliegenden Rändern der beiden Halbschalen Entlüftungsöffungen vorgesehen sind, die im Herstellprozeß zumindest teilweise mit Kunststoff ausfüllbar sind.

Um ein möglichst gleichmäßiges Fließen des Kunststoffs zu ermöglichen, sind die Entlüftungsöffnungen in Längsrichtung mit Abstand zueinander angeordnet sind und vorteilhafterweise ist in wenigstens einer der Halbschalen in Längsrichtung gesehen jeweils zwischen zwei Entlüftungsöffnungen eine Befüllmöglichkeit vorgesehen.

Je nach Ausgestaltung der Ränder der Halbschalen, können die aneinanderliegenden Rändern Anbindungspunkte für weitere Komponenten bilden.

Bevorzugt wird das erfindungsgemäße Bauteil als Querträger in einem Kraftfahrzeug, wobei der Kanal ein Luftführungskanal und/oder ein Kabelkanal ist, verwendet. Alternativ könnte das Bauteil als unter einer Windschutzscheibe angeordneter Querträger in einem Kraftfahrzeug, wobei der Kanal ein Luftführungskanal zur Führung der der Windschutzscheibe zur Enteisung oder Beheizung einer Wischblattablage und/oder den Seitenscheiben zuzuführenden Defrostluft ist, eingesetzt werden. Eine weitere Möglichkeit der Verwendung des erfindungsgemäßen Bauteils ist als Querträger in einem Frontendbereich des Kraftfahrzeuges, wobei der Kanal ein Kabelkanal ist oder ein Behältnis für ein Medium, wie Wischwasser für die Scheinwerfer oder die Windschutzscheibe, Kühlwasser, Öl, Druckluft oder dergleichen bildet, oder einen Kanal für eine geschützte Verlegung von Benzinleitungen, Ölleitungen, Druckluftleitungen oder dergleichen bildet. Das erfindungsgemäße Bauteil könnte auch als Rear-End oder Heckabschlußmodul Verwendung finden.

Das erfindungsgemäße Verfahren zur Herstellung des Bauteils zeichnet sich durch folgende Verfahrensschritte aus:
- Formen des Grundkörpers mit den entsprechenden Öffnungen und/oder Durchbrechungen
- Anbringen der aus Material des Grundkörpers bestehenen Halterungen an den Grundkörper
- Einlegen des/der Grundkörper(s) in ein Werkzeug
- Anformen, beispielsweise Anspritzen, sämtlicher Kunststoffteile und Kunststoffauskleidungen an den Grundkörper in einem einzigen Verfahrensschritt.
Durch die wenigen Verfahrensschritte ist das erfindungsgemäße Verfahren besonders kostengünstig.

Der Kanal des Bauteils kann in einer Ausbildung der Erfindung in dem Verfahrensschritt des Kunststoffeinbringens durch einen Werkzeugkern gebildet sein, was insbesondere dann vorteilhaft ist, wenn der Kunststoff unter Druck eingespritzt wird. Bei drucklosen Einbringen des Kunststoffs, beispielsweise Gießen, kann ein Blaskern, ein gefüllter Formschlauch, Gase, Granulate, ein Ausschmelzkern oder ein verlorener Kern verwendet werden.

Im folgenden wird die Erfindung anhand von Ausführungsbeispielen unter Bezugnahme auf die Zeichnung im Einzelnen erläutert. In der Zeichnung zeigen:
- Fig. 1: eine perspektivische Ansicht eines erfindungsgemäßen Bauteils als Instrumententafelträger ;
- Fig. 2: eine Ansicht wie Fig. 1 aus einer anderen Perspektive;
- Fig. 3: eine Ansicht des Bauteils aus Fig. 1 von der Seite;
- Fig. 4: eine Ansicht einer Ausführungsform des erfindungsgemäßen Bauteils mit zwei Halbschalen;
- Fig. 5: die beiden Halbschalen des Bauteils aus Fig. 4 in Explosionsdarstellung;
- Fig. 6: die beiden Halbschalen des Bauteils aus Fig. 4 zusammengesetzt dargestellt;
- Fig. 7: eine Detailansicht des Bauteils aus Fig. 4;
- Fig. 8: eine Ansicht der Ränder der beiden Halbschalen aus der Ansicht VIII aus Fig. 6;
- Fig. 9 und 10: Querschnitte entlang der Linien IX-IX und X-X aus Fig. 7;
- Fig. 11a bis c: sowie
- Fig. 12a bis b: Querschnitte verschiedener Ausführungsformen der Verbindungen der Halbschalen;
- Fig. 13 bis 18: Ansichten verschiedener Ausführungen des Bauteils mit verschiedenen Rändern und ggf. zusätzlichen Kanälen;
- Fig. 19: ein Bauteil mit unrundem Querschnitt;
- Fig. 20: Darstellung des Kunststoffflusses im Spritzgußprozeß.

Ein in der Zeichnung dargestelltes erfindungsgemäßes Bauteil 10 ist in dem dargestellten Ausführungsbeispiel als Instrumententafelträger ausgebildet und wird im folgenden als Querträger bezeichnet. Der Querträger 10 ist in einem Fahrzeug in nicht dargestellter Weise zwischen den A-Säulen des Fahrzeugs angeordnet und in geeigneter Weise an diesen festlegbar. Mit dem Pfeil 12 ist die Fahrtrichtung angedeutet.

Der Querträger 10 weist einen bevorzugt aus Metall bestehenden Grundkörper 14 auf, der im wesentlichen rohrartig ausgebildet ist. An den Grundkörper 14 sind Halterungen, beispielsweise eine Lenksäulenhalterung 16 und 17 und Anbindungselemente 18, 20, 21 für einen Beifahrerairbag angebunden. Diese Halterungen und Anbindungselemente bestehen im wesentlichen ebenfalls bevorzugt aus Metall und sind an den Grundkörper 14 in geeigneter Weise angebunden, beispielsweise angeschweißt. Zur Verstärkung und besseren Aussteifung können Verstärkungsrippen aus Kunststoff, wie beispielsweise bei dem Bezugszeichen 19 angedeutet, vorgesehen sein. Die Halterungen und Anbindungselemente können auch von dem Kunststoff umgeben sein, wodurch die Steifigkeit erhöht ist, ein Klappern vermieden wird und ein Kantenschutz gegeben ist.

Der Grundkörper 14 ist innenseitig mit Kunststoff 22 ausgekleidet und bildet einen Kanal 24 mit Innenwänden 25 zur Führung von Medien, beispielsweise Luft. Der Kunststoff kann in den Grundkörper 14 in einem Spritzgußverfahren eingebracht sein. Alternativ und abhängig von der Art des Kunststoffs kann dieser auch eingeschäumt, eingegossen oder in ähnlicher Weise eingebracht sein, wie bereits eingangs ausführlich erläutert. In der folgenden Beschreibung ist beispielhaft lediglich das Einspritzen im Spritzgußverfahren erwähnt, ohne darauf beschränkt zu sein.

Desweiteren weist der Grundkörper 14 eine Vielzahl von Durchbrechungen auf, die von dem Kunststoff durchsetzt sind, wie dies beispielsweise bei den Bezugszeichen 26 und 28 dargestellt ist. Bei 26 und 28 bildet der Kunststoff quasi ein Niet, so daß der Kunststoff fest mit dem Grundkörper 14 verbunden ist.

Der Grundkörper 14 weist eine weitere Vielzahl von Durchbrechungen auf, die ebenfalls von dem Kunststoff durchsetzt sind, die aber auf der Aussenseite des Querträgers 14 eine Halterung bilden, wie dies beispielweise bei 30 oder 32 angedeutet ist. Hier sind die Halterungen 30 und 32 schematisch als einfache Ösen und Haken dargestellt. Die verschiedensten Formen für die Halterungen sind denkbar.

Desweiteren weist der Querträger etwa mittig eine größere Öffnung 34 auf, an die sich eine Kunststoffschale 36 anschließt. Diese Kunststoffschale 36 kann ein Teil eines nicht weiter dargestellten Klimaanlagengehäuses bilden, von dem aus klimatisierte Luft in den Kanal 24 einleitbar ist. Die Luft wird durch den Kanal 24 zu in dem Querträger vorgesehenen Austrittsöffnungen 40, 42, 44, 46 geführt. An die Austrittsöffnungen schließen sich jeweils Luftaustrittsstutzen 50, 52, 54, 56 an, die bevorzugt ebenfalls aus dem Kunststoff bestehen.

Alle Kunststoffteile, wie Kanalinnenwände 25, Nieten 26, 28, Halterungen 30, 32, Gehäuseteil 36, Luftaustrittsstutzen 50, 52, 54, 56, Verstärkungsrippen 19 werden in einem einzigen Spritzgußprozeß gespritzt. Zur Herstellung wird zunächst der Grundkörper geformt und mit den entsprechenden Öffnungen versehen. Dann werden die aus Metall bestehenen Halterungen angeschweißt, genietet, getoxt, geschraubt oder dergleichen befestigt. Danach wird der Grundkörper in ein entsprechendes Spritzwerkzeug eingelegt und sämtliche Kunststoffteile in einem Spritzvorgang an den Grundkörper angespritzt.

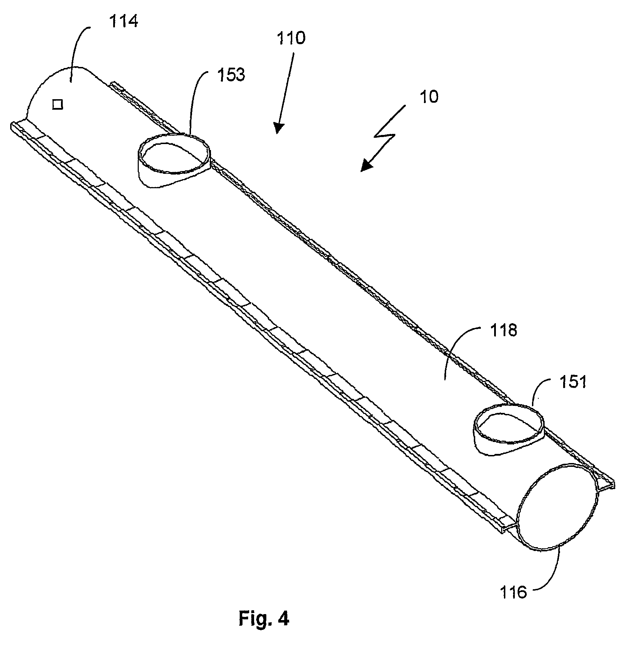

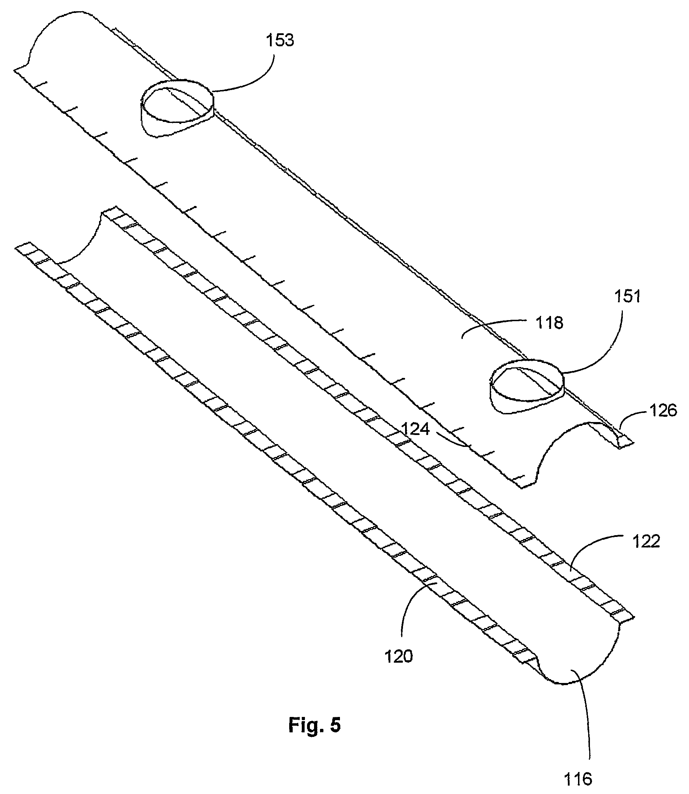

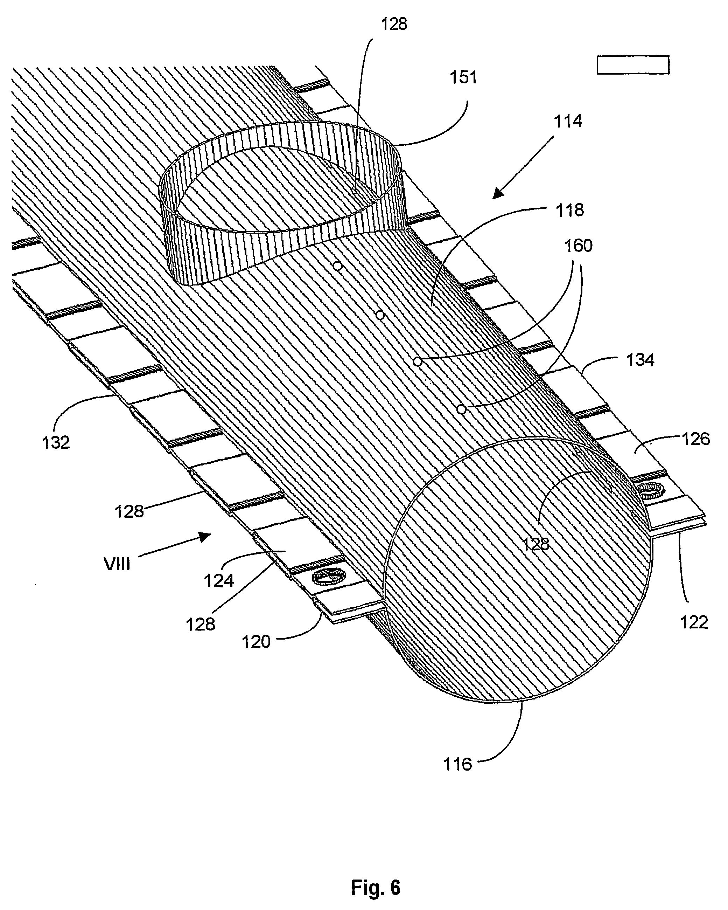

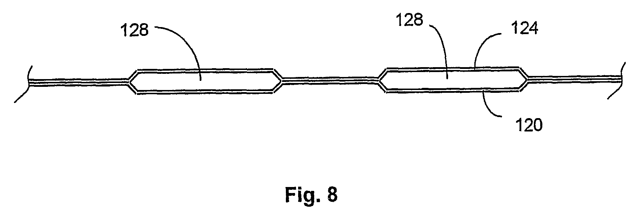

In einer weiteren, bevorzugten Ausführungsform der Erfindung ist der den Kanal bildende Grundkörper 114 des erfindungsgemäßen Bauteils 110 zweiteilig ausgebildet (Fig. 4) und besteht aus erster und zweiter Halbschale 116 und 118, die in Fig. 5 einzeln dargestellt sind. Die Halbschalen 116 und 118 weisen jeweils abgewinkelte Längsränder 120 und 122 bzw. 124 und 126 auf, die bei Bildung des rohrartigen Grundkörpers 14, wie in Fig. 6 dargestellt, aneinander liegen. Die Längsränder 120, 122, 124 und 126 sind derart geformt, daß bei Aneinanderliegen (Fig. 6) Entlüftungsöffnungen 128 frei bleiben, wie dies in Fig. 8 im Detail dargestellt ist. Die Funktion dieser Entlüftungsöffnungen 128 wird weiter unten bei der Beschreibung des Herstellverfahrens näher erläutert. Luftaustrittsstutzen 151 und 153 können in einem oder beiden Halbschalen 116, 118 vorgesehen sein.

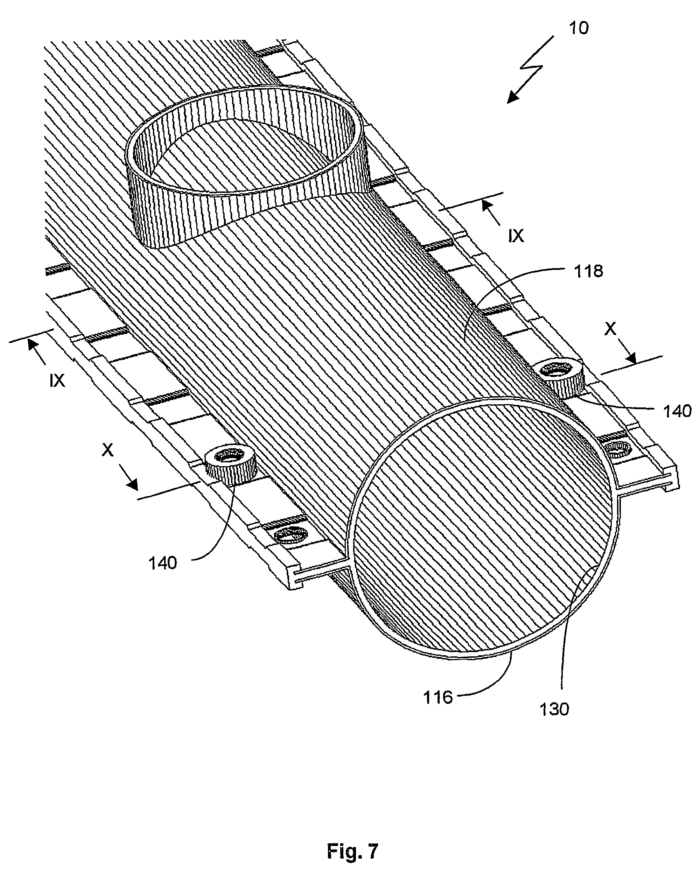

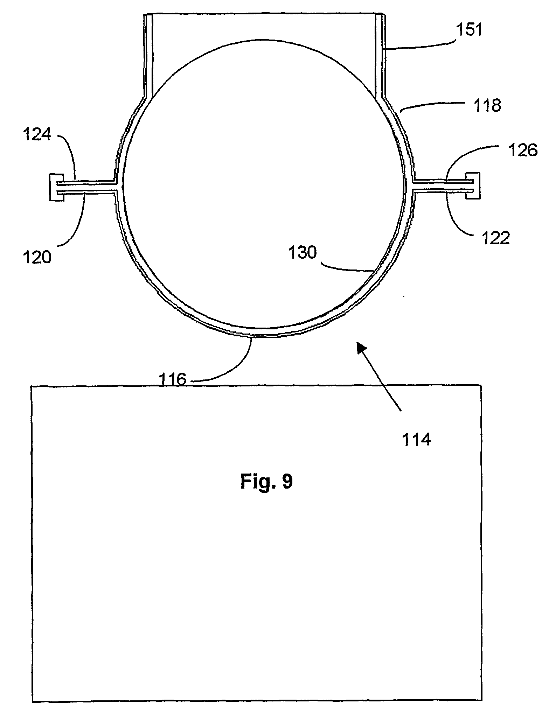

Der rohrartige Grundkörper 114 ist wie in dem ersten Ausführungsbeispiel innenseitig mit einem Kunststoff 130 ausgekleidet, wobei der Kunststoff in einem Spritzgußprozeß eingespritzt wird. Der Kunststoff 130 bedeckt dabei nicht nur die Innenseiten des Grundkörpers 114 mit seinen Halbschalen 116 und 118, sondern durchsetzt auch die Entlüftungsöffnungen 128 und umgreift äußerste Ränder 132 und 134 der abgewinkelten Ränder 120, 122, 124 und 126, wie dies beispielsweise in Fig. 7 und in dem Querschnitt in Fig. 9 zu erkennen ist. Dadurch ist eine erste Möglichkeit aufgezeigt, wie die beiden Halbschalen 116 und 118 über den eingespritzten Kunststoff 130 miteinander verbindbar sind.

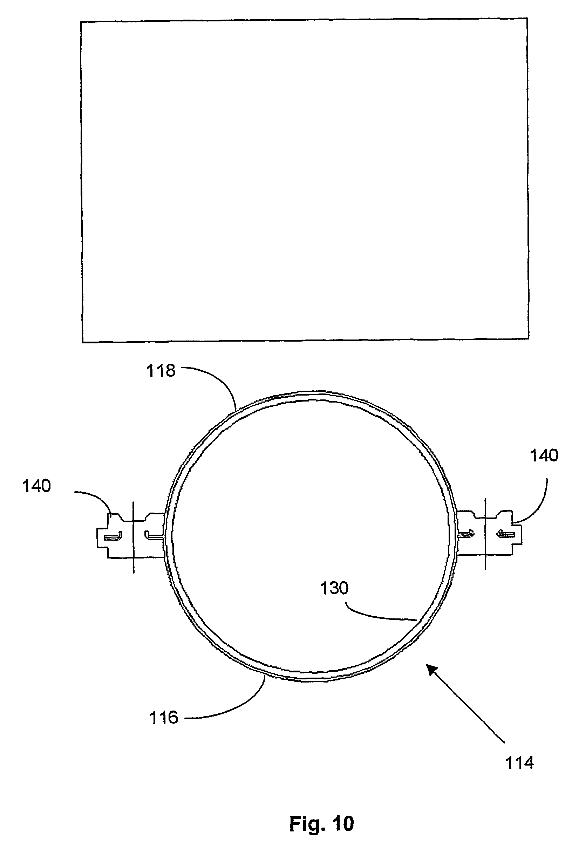

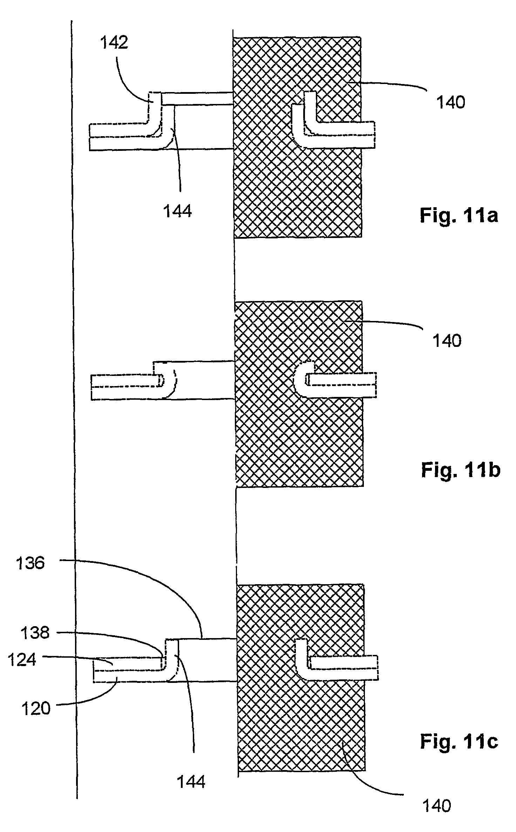

Eine zweite Möglichkeit zur Verbindung der beiden Halbschalen 116 und 118 ist ebenfalls in Fig. 7 und in dem Querschnitt in Fig. 10 dargestellt. Hier weisen die abgewinkelten Seitenränder 120 und 124 bzw. 122 und 126 jeweils zueinander korrespondierende Durchbrechungen 136 und 138, wie beispielsweise in Fig. 11c im Detail dargestellt ist, auf. Beim Einspritzen des Kunststoffs 130 wird gleichzeitig ein Kunststoffniet 140 in und um die Durchbrechnungen 136 und 138 gespritzt, so daß über diesen Kunststoffniet 140 eine weitere Verbindungsmöglichkeit gegeben ist. Dabei können die Durchbrechungen 136 und 138 im Detail verschieden ausgeführt sein, wie dies im Detail an einzelnen Beispielen in den Fig. 11a, b und c dargestellt ist. So können die Durchbrechungen 136 und 138 Durchzüge 142 und 144 aufweisen, durch die gegebenenfalls das genaue Zusammenfügen der Halbschalen 116 und 118 vereinfacht sein kann.

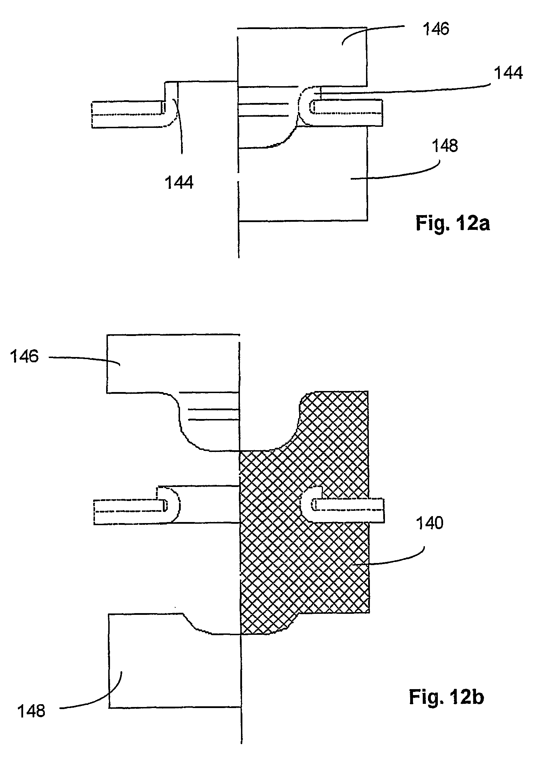

Wie in der Fig. 12a dargestellt, können diese Durchzüge auch über einen Stempel 146, beispielsweise nach Einlegen der Halbschalen in ein Spritzgußwerkzeug derart umgebogen werden, daß gleichzeitig eine mechanische Verbindung zwischen den beiden Halbschalen 116 und 118 gegeben ist. Wie in Fig. 12b angedeutet, können der Stempel und die zugehörige Matrize nach Umbördelung des Durchzugs 144 zurückgefahren werden und die Außenform des danach eingespritzten Kunststoffniets 140 bestimmen.

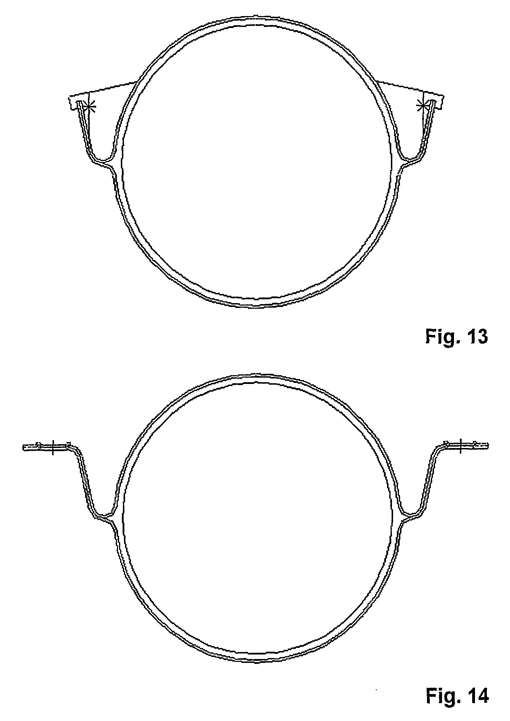

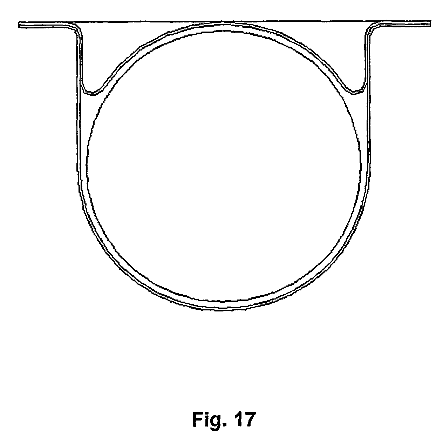

Die Form der Halbschale 116 und 118 kann im Detail unterschiedlich ausgebildet sein, wie dies beispielsweise die Darstellungen in den Fig. 13 bis 19 zeigen.

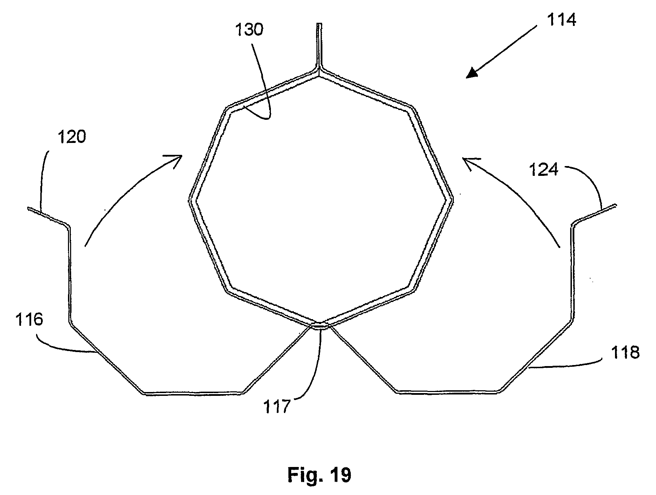

So kann beispielsweise der durch den Grundkörper 114 gebildete Kanal nicht nur rund, sondern auch vieleckig sein, wie beispielsweise in Fig. 19 dargestellt. In Fig. 19 ist ebenfalls die Möglichkeit dargestellt, daß die Halbschalen 116 und 118 einstückig ausgebildet sein können und entlang eines Scharnieres 117 gegeneinander verschwenkbar sind. Vor dem Spritzen des Kunststoffs 130 werden die Halbschalen 116 und 118 zusammengeschwenkt zur Bildung des Grundkörpers 114, in den dann der Kunststoff 130 eingespritzt wird. In dieser Ausführungsform gibt es dann nur die abgewinkelten Längsränder 120' und 124' an einer Längsseite des Grundkörpers 114.

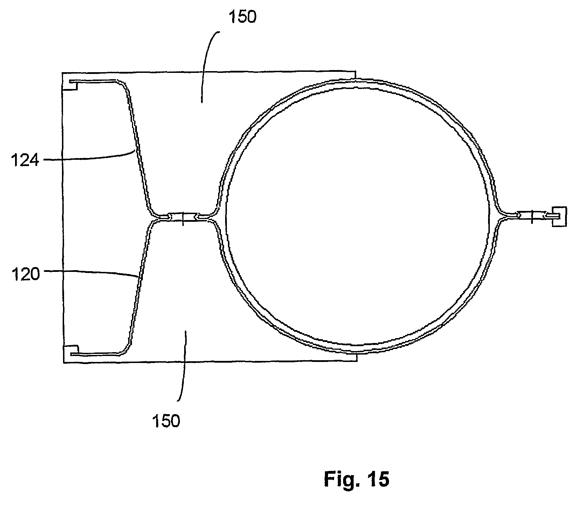

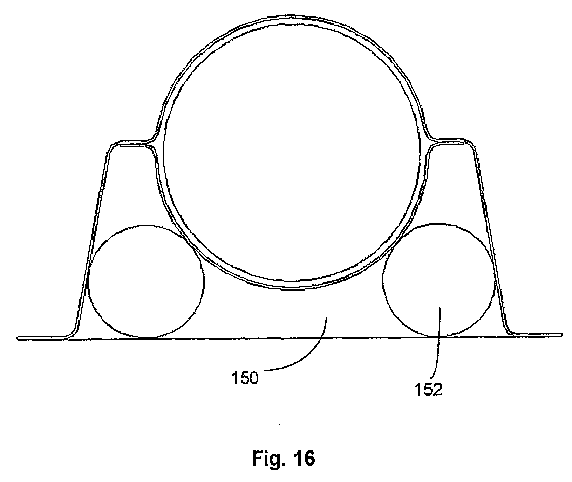

Des weiteren können die Längsränder 120, 122, 124 und 126 der Halbschalen 116 und 118 in verschiedenster Weise ausgebildet sein, wie in den Fig. 13 bis 18 dargestellt. Insbesondere können sie derart ausgebildet sein, daß die Längsränder Anbindungspunkte für weitere Komponenten, wie beispielsweise Lenksäule, Airbag oder dergleichen, bilden. Falls die Längsränder sehr ausladend ausgebildet sind, wie beispielsweise in Fig. 15 bei den Längsrändern 120 und 124 dargestellt, können diese Ränder 120 und 124 durch Kunststoffrippen 150 verstärkt sein, wobei die Kunststoffrippen 150 bevorzugt in dem gleichen Spritzgußprozeß gespritzt werden. Die Verstärkungsrippen 150 können darüber hinaus Öffnungen 152 aufweisen, wie in Fig. 16 dargestellt, so daß parallel zu dem durch den Grundkörper gebildeten Kanal beispielsweise Kabel geführt werden können.

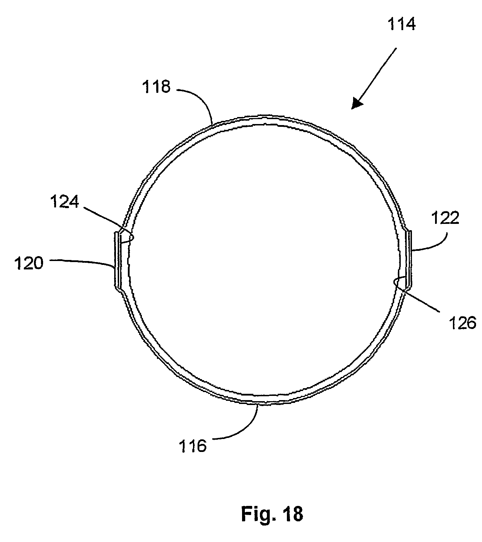

In Fig. 18 ist ein Ausführungsbeispiel gezeigt, bei dem die Längsränder 120, 122, 124 und 126 nicht abgewinkelt sind, sondern in Richtung des Umfanges des Grundkörpers 114 ausgebildet sind, so daß die Halbschalen 116 und 118 quasi ineinandersteckbar sind. Die Verbindung der Halbschalen 116 und 118 kann wiederum über nicht näher dargestellte Nietverbindungen, wie sie in den Fig. 11 und 12 dargestellt sind, realisiert sein.

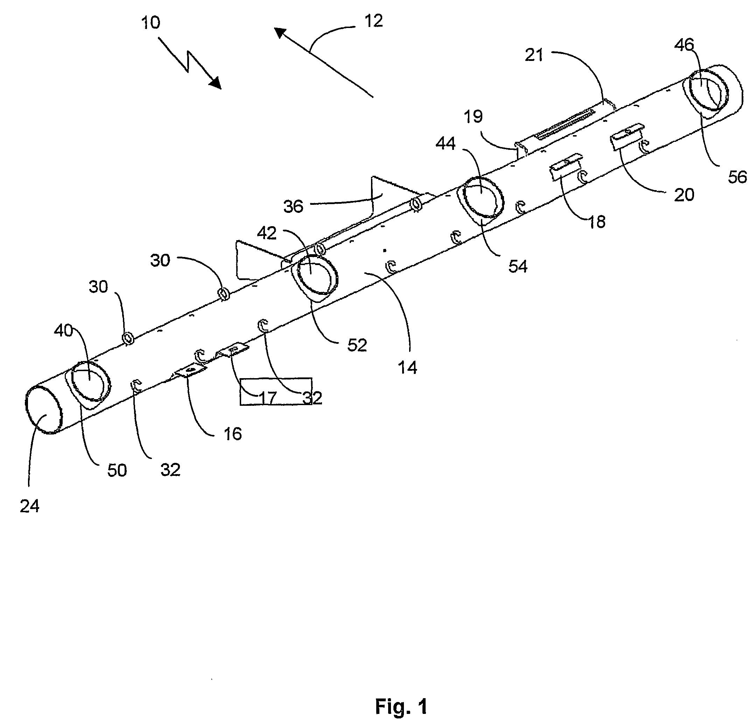

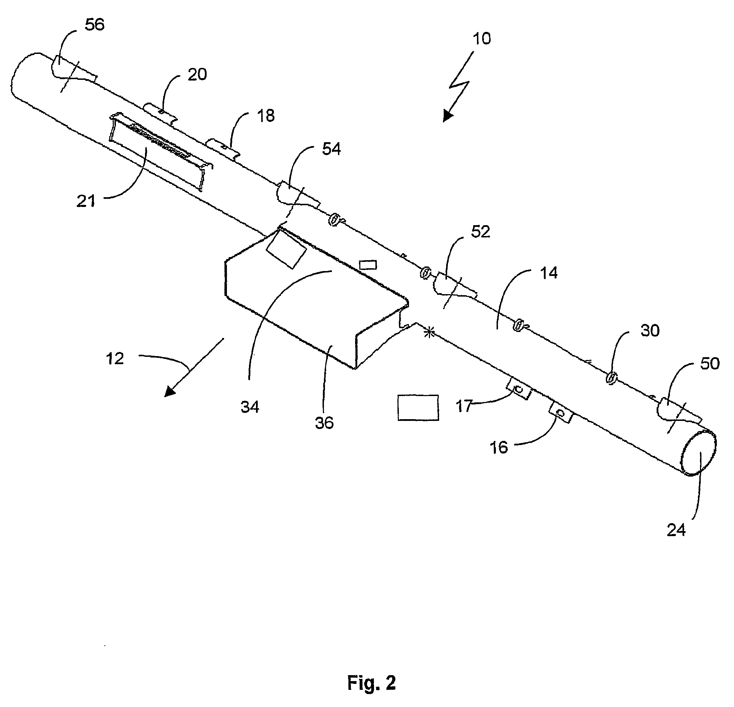

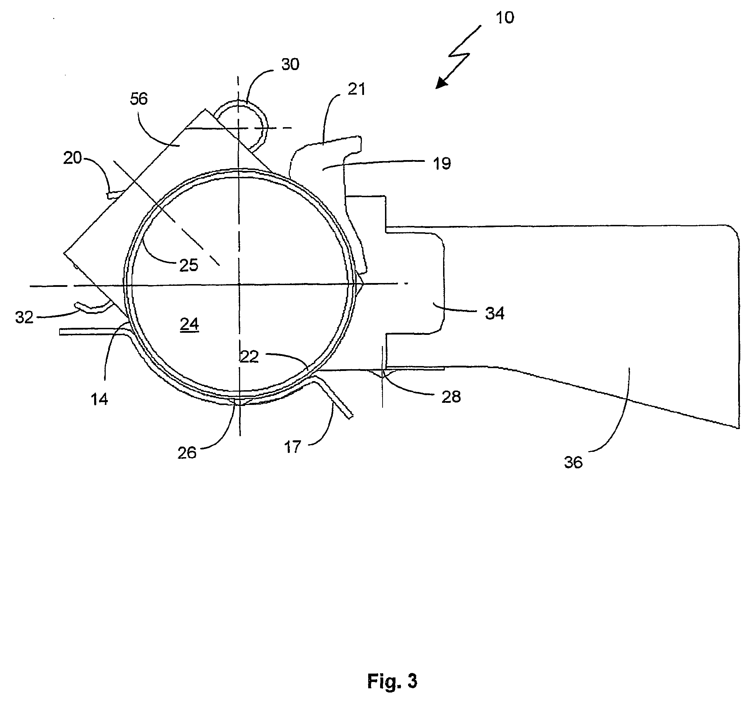

Diese zweite Ausführungsform 110 des erfindungsgemäßen Bauteils wird im wesentlichen genau so hergestellt wie die vorher beschriebene Ausführungsform bezüglich der Fig. 1 bis 3. Zunächst werden die Halbschalen 116 und 118 des Grundkörpers 114 geformt, beispielsweise in einem Tiefziehverfahren und die entsprechenden Halterungen angebracht, beispielsweise angeschweißt. Danach werden die Halbschalen 116 und 118 in das Spritzwerkzeug eingelegt und der Kunststoff 130 eingespritzt, wodurch dann der Grundkörper 140 innenseitig mit Kunststoff ausgekleidet wird und gleichzeitig die beiden Halbschalen 116 und 118, wie oben beschrieben, miteinander verbunden werden.

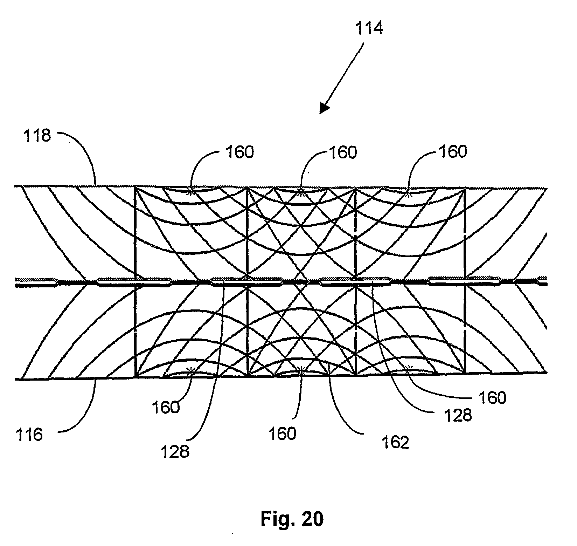

In Weiterbildung des Verfahrens ist es vorteilhaft, wenn die Halbschalen Anspritzöffnungen 160 aufweisen, die in Umfangsrichtung mittig auf wenigstens einer bevorzugt beiden Halbschalen 116, 118 angeordnet sind und in Längsrichtung jeweils zwischen zwei Entlüftungsöffnungen 128 angeordnet sind. Dann kann, wie in Fig. 20 durch Fließlinien 162 angedeutet, der eingespritzte Kunststoff in vorteilhafter Weise, ausgehend von den Anspritzöffnungen 160, relativ drucklos fließen, wobei durch die Entlüftungsöffnungen 128 die im Spritzgußprozeß verdrängte Luft entweichen kann. Dadurch wird ein prozeßsicherer Spritzgußprozeß ermöglicht, in dem der Kunststoff verbessert in sämtliche Bereiche fließen kann.

In einer Ausführungsform der Erfindung kann nach dem Einlegen der Halbschalen 116 und 118 in das Spritzgußwerkzeug und vor dem Spritzgießen des Kunststoffes noch ein Verstemmen der Durchzüge 144, wie in den Fig. 12a und 12b angedeutet und wie weiter oben bereits beschrieben, vorgesehen sein.

## Patentansprüche (Patentansprüche für folgende(n) Vertragsstaat(en): AT, BE, CH, LI, CY, DK, ES, FI, GR, IE, IT, LU, MC, NL, PT, SE, TR)

1. Bauteil, insbesondere Querträger zum Anordnen zwischen A-Säulen eines Kraftfahrzeuges, mit einem im wesentlichen rohrartigen Grundkörper (14, 114), in dem wenigstens ein Kanal (24) vorgesehen ist, **dadurch gekennzeichnet, daß** der Grundkörper (14, 114) innen mit angeformtem Kunststoff (22, 130) ausgekleidet ist zur Bildung von aus Kunststoff bestehenden Kanalwänden (25).

2. Bauteil nach einem der vorhergehenden Ansprüche, **dadurch gekennzeichnet, daß** der Grundkörper (14) Durchbrechungen aufweist, die mit dem Kunststoff (22) durchsetzt sind und daß an den Grundkörper Halterungen (30, 32), Anbindungspunkte oder Gehäuseteile (36) einer Heizungs- oder Klimaanlage o. dgl. Elemente aus dem Kunststoff einstückig angeformt sind.

3. Bauteil nach Anspruch 2, **dadurch gekennzeichnet, daß** der Grundkörper (14) und/oder die Halterungen und/oder Anbindungspunkte (21) über einstückig angeformte Kunststoffrippen (19) aussteifbar sind.

4. Bauteil nach einem der vorhergehenden Ansprüche, **dadurch gekennzeichnet, daß** der Kunststoff in einem Spritzgußverfahren einbringbar ist.

5. Bauteil nach einem der vorhergehenden Ansprüche 1 bis 3, **dadurch gekennzeichnet, daß** der Kunststoff aus einem Schaummaterial, beispielsweise einem Polyurethanschaum oder einem Partikelschaum, besteht.

6. Bauteil nach einem der vorhergehenden Ansprüche, **dadurch gekennzeichnet, daß** der Kunststoff aus über ein Bindemittel miteinander verbundenen Schaumpartikeln besteht.

7. Bauteil nach Anspruch 3, **dadurch gekennzeichnet, daß** an den Grundkörper (14) vor dem Anformen des Kunststoffs weitere Anbindungspunkte (18, 20, 21) oder Halterungen (16, 17) durch Schweißen, Clinchen oder andere Fügeverfahren anbindbar sind und die beispielsweise über die Kunststoffrippen (19) aussteifbar sind.

8. Bauteil nach einem der vorhergehenden Ansprüche, **dadurch gekennzeichnet, daß** der rohrartige Grundkörper (114) aus zwei Halbschalen (116, 118) gebildet ist, die über den angeformten Kunststoff (130) miteinander verbunden sind.

9. Bauteil nach Anspruch 8, **dadurch gekennzeichnet, daß** die Halbschalen (116, 118) über den Kunststoff (130) nach Art von Nieten (140) zusammengehalten sind.

10. Bauteil nach Anspruch 9, **dadurch gekennzeichnet, daß** die Halbschalen (116,118) zusätzlich mechanisch verbunden sind.

11. Bauteil nach einem der vorhergehenden Ansprüche 8 bis 10, **dadurch gekennzeichnet, daß** zwischen aneinanderliegenden Rändern (120 und 124, 122 und 126) der beiden Halbschalen (116, 118) Entlüftungsöffungen (128) vorgesehen sind, die im Herstellprozeß zumindest teilweise mit Kunststoff (130) ausfüllbar sind.

12. Bauteil nach Anspruch 11, **dadurch gekennzeichnet, daß** die Entlüftungsöffnungen (128) in Längsrichtung des Grundkörpers mit Abstand zueinander angeordnet sind.

13. Bauteil nach Anspruch 12, **dadurch gekennzeichnet, daß** in wenigstens einer der Halbschalen (116, 118) in Längsrichtung gesehen jeweils zwischen zwei Entlüftungsöffnungen (128) eine Befüllmöglichkeit (160) vorgesehen ist.

14. Bauteil nach einem der vorhergehenden Ansprüche 8 bis 13, **dadurch gekennzeichnet, daß** die aneinanderliegenden Ränder (120 und 124, 122 und 126) der beiden Halbschalen (116, 118) Anbindungspunkte für weitere Komponenten bilden.

15. Verwendung eines Bauteils nach einem der vorhergehenden Ansprüche 1 bis 14 als Instrumententafelträger in einem Kraftfahrzeug, wobei der Kanal ein Luftführungskanal und/oder ein Kabelkanal ist.

16. Verwendung eines Bauteils nach einem der vorhergehenden Ansprüche 1 bis 14 als unter einer Windschutzscheibe angeordneter Querträger in einem Kraftfahrzeug, wobei der Kanal ein Luftführungskanal zur Führung der der Windschutzscheibe und/oder den Seitenscheiben zuzuführenden Defrostluft ist und/oder zur Beheizung einer Wischblattablage.

17. Verfahren zur Herstellung eines Bauteils (10, 110) nach Anspruch 2, bei dem zunächst der Grundkörper (14, 114) geformt und mit den entsprechenden Öffnungen und/oder Durchbrechungen versehen wird, dann die aus Metall bestehenen Halterungen (16, 17, 21) an den Grundkörper (14, 114) angebracht werden und danach der Grundkörper (14, 114) in ein Werkzeug eingelegt wird und sämtliche Kunststoffteile und Kunststoffauskleidungen in einem einzigen Verfahrensschritt an den Grundkörper (14, 114) angeformt, beispielsweise angespritzt, werden.

18. Verfahren nach Anspruch 17 und wobei der Rohrartige Grundkörper (114) aus zwei Halbschalen (116, 118) gebildet ist, **dadurch gekennzeichnet, daß** vor dem Verfahrensschritt des Kunststoffeinbringens die Halbschalen (116, 118) in dem Werkzeug durch beispielsweise Verstemmen miteinander verbunden werden.

19. Verfahren nach einem der vorhergehenden Ansprüche 17 oder 18, **dadurch gekennzeichnet, daß** der Kanal in dem Verfahrensschritt des Kunststoffeinbringens durch einen Werkzeugkern gebildet wird.

20. Verfahren nach einem der vorhergehenden Ansprüche 17 oder 18, **dadurch gekennzeichnet, daß** der Kanal in dem Verfahrensschritt des Kunststoffeinbringens durch einen Blaskem, einen gefüllten Formschlauch, durch Gase oder Granulate gebildet wird.

21. Verfahren nach einem der vorhergehenden Ansprüche 17 oder 18, **dadurch gekennzeichnet, daß** der Kanal in dem Verfahrensschritt des Kunststoffeinbringens durch einen Ausschmelzkern gebildet wird.

22. Verfahren nach einem der vorhergehenden Ansprüche 17 oder 18, **dadurch gekennzeichnet, daß** der Kanal in dem Verfahrensschritt des Kunststoffeinbringens durch einen verlorenen Kern gebildet wird.

23. Verfahren nach Anspruch 17 und wobei der Rohrartige Grundkörper (114) aus zwei Halbschalen (116, 118) gebildet ist, **dadurch gekennzeichnet, daß** die den Grundkörper bildenden Halbschalen vor dem Zusammenfügen mit Kunststoff ausgekleidet werden.

## Patentansprüche (Patentansprüche für folgende(n) Vertragsstaat(en): DE, FR, GB)

1. Bauteil, insbesondere Querträger zum Anordnen zwischen A-Säulen eines Kraftfahrzeuges, mit einem im wesentlichen rohrartigen Grundkörper (14, 114), in dem wenigstens ein Kanal (24) vorgesehen ist, **dadurch gekennzeichnet, daß** der Grundkörper (14, 114) innen mit angeformtem Kunststoff (22, 130) ausgekleidet ist zur Bildung von aus Kunststoff bestehenden Kanalwänden (25), wobei der Grundkörper (14) Durchbrechungen aufweist, die mit dem Kunststoff (22) durchsetzt sind.

2. Bauteil nach Anspruch 1, **dadurch gekennzeichnet, daß** aus dem Kunststoff an den Grundkörper einstückig Halterungen (30, 32), Anbindungspunkte oder Gehäuseteile (36) einer Heizungs- oder Klimaanlage o. dgl. Elemente angeformt sind.

3. Bauteil nach Anspruch 2, **dadurch gekennzeichnet, daß** der Grundkörper (14) und/oder die Halterungen und/oder Anbindungspunkte (21) über einstückig angeformte Kunststoffrippen (19) aussteifbar sind.

4. Bauteil nach einem der vorhergehenden Ansprüche, **dadurch gekennzeichnet, daß** der Kunststoff in einem Spritzgußverfahren einbringbar ist.

5. Bauteil nach einem der vorhergehenden Ansprüche 1 bis 3, **dadurch gekennzeichnet, daß** der Kunststoff aus einem Schaummaterial, beispielsweise einem Polyurethanschaum oder einem Partikelschaum, besteht.

6. Bauteil nach einem der vorhergehenden Ansprüche, **dadurch gekennzeichnet, daß** der Kunststoff aus über ein Bindemittel miteinander verbundenen Schaumpartikeln besteht.

7. Bauteil nach Anspruch 3, **dadurch gekennzeichnet, daß** an den Grundkörper (14) vor dem Anformen des Kunststoffs weitere Anbindungspunkte (18, 20, 21) oder Halterungen (16, 17) durch Schweißen, Clinchen oder andere Fügeverfahren anbindbar sind und die beispielsweise über die Kunststoffrippen (19) aussteifbar sind.

8. Bauteil nach einem der vorhergehenden Ansprüche, **dadurch gekennzeichnet, daß** der rohrartige Grundkörper (114) aus zwei Halbschalen (116, 118) gebildet ist, die über den angeformten Kunststoff (130) miteinander verbunden sind.

9. Bauteil nach Anspruch 8, **dadurch gekennzeichnet, daß** die Halbschalen (116, 118) über den Kunststoff (130) nach Art von Nieten (140) zusammengehalten sind.

10. Bauteil nach Anspruch 9, **dadurch gekennzeichnet, daß** die Halbschalen (116, 118) zusätzlich mechanisch verbunden sind.

11. Bauteil nach einem der vorhergehenden Ansprüche 8 bis 10, **dadurch gekennzeichnet, daß** zwischen aneinanderliegenden Rändern (120 und 124, 122 und 126) der beiden Halbschalen (116, 118) Entlüftungsöffungen (128) vorgesehen sind, die im Herstellprozeß zumindest teilweise mit Kunststoff (130) ausfüllbar sind.

12. Bauteil nach Anspruch 11, **dadurch gekennzeichnet, daß** die Entlüftungsöffnungen (128) in Längsrichtung des Grundkörpers mit Abstand zueinander angeordnet sind.

13. Bauteil nach Anspruch 12, **dadurch gekennzeichnet, daß** in wenigstens einer der Halbschalen (116, 118) in Längsrichtung gesehen jeweils zwischen zwei Entlüftungsöffnungen (128) eine Befüllmöglichkeit (160) vorgesehen ist.

14. Bauteil nach einem der vorhergehenden Ansprüche 8 bis 13, **dadurch gekennzeichnet, daß** die aneinanderliegenden Ränder (120 und 124, 122 und 126) der beiden Halbschalen (116, 118) Anbindungspunkte für weitere Komponenten bilden.

15. Verwendung eines Bauteils nach einem der vorhergehenden Ansprüche 1 bis 14 als Instrumententafelträger in einem Kraftfahrzeug, wobei der Kanal ein Luftführungskanal und/oder ein Kabelkanal ist.

16. Verwendung eines Bauteils nach einem der vorhergehenden Ansprüche 1 bis 14 als unter einer Windschutzscheibe angeordneter Querträger in einem Kraftfahrzeug, wobei der Kanal ein Luftführungskanal zur Führung der der Windschutzscheibe und/oder den Seitenscheiben zuzuführenden Defrostluft ist und/oder zur Beheizung einer Wischblattablage.

17. Verfahren zur Herstellung eines Bauteils (10, 110) nach Anspruch 2, bei dem zunächst der Grundkörper (14, 114) geformt und mit den entsprechenden Öffnungen und/oder Durchbrechungen versehen wird, dann die aus Metall bestehenen Halterungen (16, 17, 21) an den Grundkörper (14, 114) angebracht werden und danach der Grundkörper (14, 114) in ein Werkzeug eingelegt wird und sämtliche Kunststoffteile und Kunststoffauskleidungen in einem einzigen Verfahrensschritt an den Grundkörper (14, 114) angeformt, beispielsweise angespritzt, werden.

18. Verfahren nach Anspruch 17 und wobei der Rohrartige Grundkörper (114) aus zwei Halbschalen (116, 118) gebildet ist, **dadurch gekennzeichnet, daß** vor dem Verfahrensschritt des Kunststoffeinbringens die Halbschalen (116, 118) in dem Werkzeug durch beispielsweise Verstemmen miteinander verbunden werden.

19. Verfahren nach einem der vorhergehenden Ansprüche 17 oder 18, **dadurch gekennzeichnet, daß** der Kanal in dem Verfahrensschritt des Kunststoffeinbringens durch einen Werkzeugkem gebildet wird.

20. Verfahren nach einem der vorhergehenden Ansprüche 17 oder 18, **dadurch gekennzeichnet, daß** der Kanal in dem Verfahrensschritt des Kunststoffeinbringens durch einen Blaskem, einen gefüllten Formschlauch, durch Gase oder Granulate gebildet wird.

21. Verfahren nach einem der vorhergehenden Ansprüche 17 oder 18, **dadurch gekennzeichnet, daß** der Kanal in dem Verfahrensschritt des Kunststoffeinbringens durch einen Ausschmelzkern gebildet wird.

22. Verfahren nach einem der vorhergehenden Ansprüche 17 oder 18, **dadurch gekennzeichnet, daß** der Kanal in dem Verfahrensschritt des Kunststoffeinbringens durch einen verlorenen Kern gebildet wird.

23. Verfahren nach Anspruch 17 und wobei der Rohrartige Grundkörper (114) aus zwei Halbschalen (116, 118) gebildet ist, **dadurch gekennzeichnet, daß** die den Grundkörper bildenden Halbschalen vor dem Zusammenfügen mit Kunststoff ausgekleidet werden.

## Claims (Claims for the following Contracting State(s): AT, BE, CH, LI, CY, DK, ES, FI, GR, IE, IT, LU, MC, NL, PT, SE, TR)

1. Component, in particular a cross-member for mounting between A-columns of a motor vehicle, with an essentially tubular basic body (14, 114) in which at least one duct (24) is provided, **characterised in that** the basic body (14, 114) is internally lined with on-moulded plastic (22, 130) in order to from duct walls (25) made from plastic.

2. Component as claimed in one of the preceding claims, **characterised in that** the basic body (14) has orifices through which the plastic (22) extends, and holders (30, 32), attachment points or housing parts (36) of a heating or air-conditioning system or similar elements are integrally moulded in the plastic on the basic body

3. Component as claimed in claim 2, **characterised in that** the basic body (14) and/or the holders and/or attachment points (21) can be rendered more rigid by integrally moulded plastic ribs (19).

4. Component as claimed in one of the preceding claims, **characterised in that** the plastic can be introduced in an injection moulding process.

5. Component as claimed in one of the preceding claims 1 to 3, **characterised in that** the plastic is a foam material, for example a polyurethane foam or a particulate foam.

6. Component as claimed in one of the preceding claims, **characterised in that** the plastic comprises foam particles bonded to one another by a binding agent.

7. Component as claimed in claim 3, **characterised in that** other attachment points (18,20,21) or holders (16, 17) can be affixed to the basic body (14) by welding, clinching or other joining processes prior to on-moulding the plastic, and can be rendered more rigid by the plastic ribs (19) for example.

8. Component as claimed in one of the preceding claims, **characterised in that** the tubular basic body (114) is made from two half shells (116, 118), which are joined to one another by the on-moulded plastic (130).

9. Component as claimed in claim 8, **characterised in that** the half shells (116, 118) are held together by the plastic (130) in the form of rivets (140).

10. Component as claimed in claim 9, **characterised in that** the half shells (116, 118) are additionally mechanically joined.

11. Component as claimed in one of the preceding claims 8 to 10, **characterised in that** venting orifices (128) are provided between adjacently lying edges (120 and 124, 122 and 126) of the two half shells (116, 118), which can be at least partially filled with plastic (130) during the manufacturing process.

12. Component as claimed in claim 11, **characterised in that** the venting orifices (128) are disposed at a distance from one another in the longitudinal direction of the basic body.

13. Component as claimed in claim 12, **characterised in that** a filling means (160) is provided in at least one of the half shells (116, 118) between two respective venting orifices (128) as viewed in the longitudinal direction.

14. Component as claimed in one of the preceding claims 8 to 13, **characterised in that** the adjacently lying edges (120 and 124, 122 and 126) of the two half shells (116, 118) form attachment points for other components.

15. Use of a component as claimed in one of the preceding claims 1 to 14 as a dashboard mount in a motor vehicle, in which case the duct is an air duct and/or a cable duct.

16. Use of a component as claimed in one of the preceding claims 1 to 14 as a cross-member disposed underneath a windscreen, in which case the duct is an air duct for delivering defrosting air to the windscreen and/or side windows and/or for heating a wiper blade.

17. Method of manufacturing a component (10, 110) as claimed in claim 2, whereby the basic body (14, 114) is firstly formed and provided with the appropriate openings and/or orifices, after which the holders (16, 17, 21 ) made from metal are mounted on the basic body (14, 114) and then the basic body (14, 114) is placed in a mould and all plastic parts and plastic facings are moulded onto the basic body (14, 114), for example injected, in a single process step.

18. Method as claimed in claim 17 in which the tubular basic body (114) is made from two half shells (116, 118), **characterised in that** prior to the process step of introducing the plastic, the half shells (116, 118) are joined to one another in the mould, for example by caulking.

19. Method as claimed in one of the preceding claims 17 or 18, **characterised in that** the duct is formed by a mould core during the process step of introducing the plastic.

20. Method as claimed in one of the preceding claims 17 or 18, **characterised in that** the duct is formed by means of an inflatable core, a filled moulding hose, by gases or granulates, during the process step of introducing the plastic.

21. Method as claimed in one of the preceding claims 17 or 18, **characterised in that** the duct is formed by an investment core during the process step of introducing the plastic.

22. Method as claimed in one of the preceding claims 17 or 18, **characterised in that** the duct is formed by a permanent core during the process step of introducing the plastic.

23. Method as claimed in claim 17 in which the tubular basic body (114) is made from two half shells (116, 118), **characterised in that** the half shells forming the basic body are lined with plastic prior to assembly.

## Claims (Claims for the following Contracting State(s): DE, FR, GB)

1. Component, in particular a cross-member for mounting between A-columns of a motor vehicle, with a substantially tubular basic body (14, 114), in which at least one duct (24) is provided, **characterised in that** the basic body (14, 114) is internally lined with on-moulded plastic (22, 130) in order to form duct walls (25) made from plastic, the basic body (14) having orifices through which the plastic (22) extends.

2. Component as claimed in claim 1, **characterised in that** holders (30, 32), attachment points or housing parts (36) of a heating or air-conditioning system or similar elements are integrally moulded in the plastic on the basic body.

3. Component as claimed in claim 2, **characterised in that** the basic body (14) and/or the holders and/or attachment points (21) can be rendered more rigid by integrally moulded plastic ribs (19).

4. Component as claimed in one of the preceding claims, **characterised in that** the plastic can be introduced by an injection moulding process.

5. Component as claimed in one of the preceding claims 1 to 3, **characterised in that** the plastic is a foam material, for example a polyurethane foam or a particulate foam.

6. Component as claimed in one of the preceding claims, **characterised in that** the plastic comprises foam particles bonded to one another by a binding agent.

7. Component as claimed in claim 3, **characterised in that** other attachment points (18, 20, 21 ) or holders (16, 17) can be affixed to the basic body (14) by welding, clinching or other joining processes prior to on-moulding the plastic, and can be rendered more rigid by the plastic ribs (19) for example.

8. Component as claimed in one of the preceding claims, **characterised in that** the tubular basic body (114) is made from two half shells (116, 118), which are joined to one another by the on-moulded plastic (130).

9. Component as claimed in claim 8, **characterised in that** the half shells (116, 118) are held together by the plastic (130) in the form of rivets (140).

10. Component as claimed in claim 9, **characterised in that** the half shells (116, 118) are additionally mechanically joined.

11. Component as claimed in one of the preceding claims 8 to 10, **characterised in that** venting orifices (128) are provided between adjacently lying edges (120 and 124, 122 and 126) of the two half shells (116, 118), which can be at least partially filled with plastic (130) during the manufacturing process.

12. Component as claimed in claim 11, **characterised in that** the venting orifices (128) are disposed at a distance from one another in the longitudinal direction of the basic body.

13. Component as claimed in claim 12, **characterised in that** a filling means (160) is provided in at least one of the half shells (116, 118) between two respective venting orifices (128) as viewed in the longitudinal direction.

14. Component as claimed in one of the preceding claims 8 to 13, **characterised in that** the adjacently lying edges (120 and 124, 122 and 126) of the two half shells (116, 118) form attachment points for other components

15. Use of a component as claimed in one of the preceding claims 1 to 14 as a dashboard support in a motor vehicle, in which case the duct is an air duct and/or a cable duct.

16. Use of a component as claimed in one of the preceding claims 1 to 14 as a cross-member disposed underneath a windscreen, in which case the duct is an air duct for delivering defrosting air to the windscreen and/or side windows and/or for heating a wiper blade.

17. Method of manufacturing a component (10, 110) as claimed in claim 2, whereby the basic body (14, 114) is firstly formed and provided with the appropriate openings and/or orifices, after which the holders (16, 17, 21) made from metal are mounted on the basic body (14, 114) and then the basic body (14, 114) is placed in a mould and all plastic parts and plastic facings are moulded onto the basic body (14, 114), for example injected, in a single process step

18. Method as claimed in claim 17 in which the tubular basic body (114) is made from two half shells (116, 118), **characterised in that** prior to the process step of introducing the plastic, the half shells (116, 118) are joined to one another in the mould, for example by caulking.

19. Method as claimed in one of the preceding claims 17 or 18, **characterised in that** the duct is formed by a mould core during the process step of introducing the plastic.

20. Method as claimed in one of the preceding claims 17 or 18, **characterised in that** the duct is formed by means of an inflatable core, a filled moulding hose, by gases or granulates, during the process step of introducing the plastic.

21. Method as claimed in one of the preceding claims 17 or 18, **characterised in that** the duct is formed by an investment core during , the process step of introducing the plastic.

22. Method as claimed in one of the preceding claims 17 or 18, **characterised in that** the duct is formed by a permanent core during the process step of introducing the plastic.

23. Method as claimed in claim 17 in which the tubular basic body (114) is made from two half shells (116, 118), **characterised in that** the half shells forming the basic body are lined with plastic prior to assembly.

## Revendications (Revendications pour l'(les) Etat(s) contractant(s) suivant(s): AT, BE, CH, LI, CY, DK, ES, FI, GR, IE, IT, LU, MC, NL, PT, SE, TR)

1. Elément de construction, en particulier traverse à placer entre des colonnes A d'un véhicule automobile, comprenant un corps de base (14, 114) sensiblement tubulaire, dans lequel il est prévu au moins un canal (24), **caractérisé en ce que** le corps de base (14, 114) est revêtu à l'intérieur avec de la matière synthétique (22, 130) moulée dessus pour former des parois de canal (25) à base de matière synthétique.

2. Elément de construction selon l'une quelconque des revendications précédentes, **caractérisé en ce que** le corps de base (14) présente des percements qui sont traversés avec la matière synthétique (22) et **en ce que** des fixations (3, 32), des points d'attache ou des parties de carter (36) d'une installation de chauffage ou de climatisation ou des éléments similaires sont moulés d'une seule pièce dans la matière synthétique sur le corps de base.

3. Elément de construction selon la revendication 2, **caractérisé en ce que** le corps de base (14) et/ou les fixations et/ou les points d'attache (21) peuvent être rigidifiés au moyen de nervures en matière synthétique (19) moulées d'une seule pièce.

4. Elément de construction selon l'une quelconque des revendications précédentes, **caractérisé en ce que** la matière synthétique peut être introduite dans un procédé de moulage par injection.

5. Elément de construction selon l'une quelconque des revendications 1 à 3 précédentes, **caractérisé en ce que** la matière synthétique est à base d'un matériau de mousse, par exemple une mousse de polyuréthane ou une mousse en particules.

6. Elément de construction selon l'une quelconque des revendications précédentes, **caractérisé en ce que** la matière synthétique est à base de particules de mousse reliées entre elles par un liant.

7. Elément de construction selon la revendication 3, **caractérisé en ce que**, avant le moulage de la matière synthétique, d'autres points d'attache (18, 20, 21) ou fixations (16, 17) peuvent être rattachés au corps de base (14) par soudage, rivetage ou d'autres procédés d'assemblage et qui peuvent être rigidifiés par exemple par les nervures en matière synthétique (19).

8. Elément de construction selon l'une quelconque des revendications précédentes, **caractérisé en ce que** le corps de base (114) tubulaire est constitué de deux demi-coques (116, 118), qui sont reliées entre elles par la matière synthétique (130) moulée.

9. Elément de construction selon la revendication 8, **caractérisé en ce que** les demi-coques (116, 118) sont maintenues ensemble au moyen de la matière synthétique (130) à la façon de rivets (140).

10. Elément de construction selon la revendication 9, **caractérisé en ce que** les demi-coques (116, 118) sont reliées en supplément de façon mécanique.

11. Elément de construction selon l'une quelconque des revendications précédentes 8 à 10, **caractérisé en ce que** entre des bords (120 et 124, 122 et 126) contigus des demi-coques (116, 118) sont prévus des orifices de purge (128), qui peuvent être remplis dans le cadre du procédé de fabrication au moins partiellement avec de la matière synthétique (130).

12. Elément de construction selon la revendication 11, **caractérisé en ce que** les orifices de purge (128) sont disposés dans le sens longitudinal du corps de base à distance les uns des autres.

13. Elément de construction selon la revendication 12, **caractérisé en ce qu'**il est prévu une possibilité de remplissage (160) dans au moins une des demi-coques (116, 118), vu dans le sens longitudinal, respectivement entre deux orifices de purge (128).

14. Elément de construction selon l'une quelconque des revendications précédentes 8 à 13, **caractérisé en ce que** les bords (120 et 124, 122 et 126) contigus des deux demi-coques (116, 118) forment des points d'attache pour d'autres composants.

15. Utilisation d'un élément de construction selon l'une quelconque des revendications précédentes 1 à 14 comme support du tableau de bord dans un véhicule automobile, le canal étant un canal de ventilation et/ou un caniveau de câble.

16. Utilisation d'un élément de construction selon l'une quelconque des revendications précédentes 1 à 14 comme traverse disposée sous un pare-brise dans un véhicule automobile, le canal étant un canal de ventilation pour le guidage de l'air de dégivrage à amener au pare-brise et/ou aux vitres latérales et/ou pour le chauffage d'un support de raclette d'essuie-glace.

17. Procédé pour la fabrication d'un élément de construction (10, 110) selon la revendication 2, dans lequel au moins le corps de base (14, 114) est moulé et est pourvu avec les orifices et/ou les percements correspondants, les fixations (16, 17, 21) à base de métal sont placées ensuite sur le corps de base (14, 114) et ensuite le corps de base (14, 114) est introduit dans un outil et toutes les parties en matière synthétique et revêtements de matière synthétique sont moulés, par exemple moulés par injection, sur le corps de base (14, 114) dans une seule étape de procédé.

18. Procédé selon la revendication 17 et le corps de base (114) tubulaire étant formé de deux demi-coques (116, 118), **caractérisé en ce que**, avant l'étape de procédé de l'introduction de la matière synthétique, les demi-coques (116, 118) sont reliées entre elles dans l'outil par exemple par matage.

19. Procédé selon l'une quelconque des revendications précédentes 17 ou 18, **caractérisé en ce que** le canal est moulé dans l'étape du procédé de l'introduction de matière synthétique par un noyau d'outil.

20. Procédé selon l'une quelconque des revendications 17 ou 18, **caractérisé en ce que** le canal est moulé dans l'étape de procédé de l'introduction de matière synthétique par un noyau soufflé, un flexible moulé rempli, par des gaz ou des granulés.

21. Procédé selon l'une quelconque des revendications précédentes 17 ou 18, **caractérisé en ce que** le canal est moulé dans l'étape de procédé de l'introduction de matière synthétique par un noyau à cire perdue.

22. Procédé selon l'une quelconque des revendications précédentes 17 ou 18, **caractérisé en ce que** le canal est moulé dans l'étape de procédé de l'introduction de matière synthétique par un noyau perdu.

23. Procédé selon la revendication 17 et le corps de base (114) tubulaire étant formé de deux demi-coques (116, 118), **caractérisé en ce que** les demi-coques formant le corps de base sont revêtues de matière synthétique avant l'assemblage.

## Revendications (Revendications pour l'(les) Etat(s) contractant(s) suivant(s): DE, FR, GB)

1. Elément de construction, en particulier traverse à placer entre des colonnes A d'un véhicule automobile, comprenant un corps de base (14, 114) sensiblement tubulaire, dans lequel il est prévu au moins un canal (24), **caractérisé en ce que** le corps de base (14, 114) est revêtu à l'intérieur avec de la matière synthétique (22, 130) moulée pour la formation des parois de canal (25) à base de matière synthétique, le corps de base (14) présentant des percements qui sont traversés par la matière synthétique (22).

2. Elément de construction selon la revendication 1, **caractérisé en ce que** des fixations (30, 32), des points d'attache ou des parties de carter (36) d'une installation de chauffage ou de climatisation ou des éléments similaires sont moulées d'une seule pièce dans la matière synthétique sur le corps de base.

3. Elément de construction selon la revendication 2, **caractérisé en ce que** le corps de base (14) et/ou les fixations et/ou les points d'attache (21) peuvent être rigidifiés au moyen de nervures en matière synthétique (19) moulées d'une seule pièce.

4. Elément de construction selon l'une quelconque des revendications précédentes, **caractérisé en ce que** la matière synthétique peut être introduite dans un procédé de moulage par injection.

5. Elément de construction selon l'une quelconque des revendications précédentes 1 à 3, **caractérisé en ce que** la matière synthétique est à base d'un matériau de mousse, par exemple une mousse de polyuréthane ou une mousse en particules.

6. Elément de construction selon l'une quelconque des revendications précédentes, **caractérisé en ce que** la matière synthétique est à base de particules de mousse reliées entre elles par un liant.

7. Elément de construction selon la revendication 3, **caractérisé en ce que**, avant le moulage de la matière synthétique, d'autres points d'attache (18, 20, 21) ou fixations (16, 17) peuvent être rattachés au corps de base (14) par soudage, rivetage ou d'autres procédés d'assemblage et qui peuvent être rigidifiés par exemple par les nervures en matière synthétique (19).

8. Elément de construction selon l'une quelconque des revendications précédentes, **caractérisé en ce que** le corps de base (114) tubulaire est moulé de deux demi-coques (116, 118), qui sont reliées entre elles par la matière synthétique (130) moulée.

9. Elément de construction selon la revendication 8, **caractérisé en ce que** les demi-coques (116, 118) sont maintenues au moyen de la matière synthétique (130) à la façon de rivets (140).

10. Elément de construction selon la revendication 9, **caractérisé en ce que** les demi-coques (116, 118) sont reliées en supplément de façon mécanique.

11. Elément de construction selon l'une quelconque des revendications précédentes 8 à 10, **caractérisé en ce que** entre des bords (120 et 124, 122 et 126) contigus des deux demi-coques (116, 118) sont prévus des orifices de purge (128), qui peuvent être remplis dans le cadre du procédé de fabrication au moins partiellement avec de la matière synthétique (130).

12. Elément de construction selon la revendication 11, **caractérisé en ce que** les orifices de purge (128) sont disposés dans le sens longitudinal du corps de base à distance les uns des autres.

13. Elément de construction selon la revendication 12, **caractérisé en ce qu'**une possibilité de remplissage (160) est prévue dans au moins l'une des demi-coques (116, 118), vu dans le sens longitudinal, respectivement entre deux orifices de purge (128).

14. Elément de construction selon l'une quelconque des revendications précédentes 8 à 13, **caractérisé en ce que** les bords (120 et 124, 122 et 126) contigus des deux demi-coques (116, 118) forment des points d'attache pour d'autres composants.

15. Utilisation d'un élément de construction selon l'une quelconque des revendications précédentes 1 à 14 comme support du tableau de bord dans un véhicule automobile, le canal étant un canal de ventilation et/ou un caniveau de câble.

16. Utilisation d'un élément de construction selon l'une quelconque des revendications précédentes 1 à 14 comme traverse disposée sous un pare-brise dans un véhicule automobile, le canal étant un canal de ventilation pour le guidage de l'air de dégivrage à amener au pare-brise et/ou aux vitres latérales et/ou pour le chauffage d'un support de raclette d'essuie-glace.

17. Procédé pour la fabrication d'un élément de construction (10, 110) selon la revendication 2, dans lequel au moins le corps de base (14, 114) est moulé et est pourvu avec les orifices et/ou les percements correspondants, les fixations (16, 17, 21) à base de métal sont placées ensuite sur le corps de base (14, 114) et après le corps de base (14, 114) est introduit dans un outil et toutes les parties en matière synthétique et revêtements de matière synthétique sont moulés, par exemple moulés par injection, dans une seule étape de procédé sur le corps de base (14, 114).

18. Procédé selon la revendication 17 et le corps de base (114) tubulaire étant formé de deux demi-coques (116, 118), **caractérisé en ce que**, avant l'étape de procédé de l'introduction de matière synthétique, les demi-coques (116, 118) sont reliées entre elles dans l'outil par exemple par matage.

19. Procédé selon l'une quelconque des revendications précédentes 17 ou 18, **caractérisé en ce que** le canal est moulé dans l'étape de procédé de l'introduction de matière synthétique par un noyau d'outil.

20. Procédé selon l'une quelconque des revendications précédentes 17 ou 18, **caractérisé en ce que** le canal est moulé dans l'étape de procédé de l'introduction de matière synthétique par un noyau soufflé, un flexible moulé rempli, par des gaz ou des granulés.

21. Procédé selon l'une quelconque des revendications précédentes 17 ou 18, **caractérisé en ce que** le canal est moulé dans l'étape de procédé de l'introduction de matière synthétique par un noyau à cire perdue.

22. Procédé selon l'une quelconque des revendications précédentes 17 ou 18, **caractérisé en ce que** le canal est moulé dans l'étape de procédé de l'introduction de matière synthétique par un noyau perdu.

23. Procédé selon la revendication 17 et le corps de base (114) tubulaire étant formé de deux demi-coques (116, 118), **caractérisé en ce que** les demi-coques formant le corps de base sont revêtues de matière synthétique avant l'assemblage.
